# EUROPÄISCHE PATENTSCHRIFT

(11) **EP 4 304 228 B1**
(45) Veröffentlichungstag und Bekanntmachung des Hinweises auf die Patenterteilung: **30.04.2025**
(21) Anmeldenummer: 22182770.2
(22) Anmeldetag: 04.07.2022
(51) Int. Cl.: H04W 12/63, H04W 12/65, G06V 20/30, G06F 21/62, H04N 1/32, H04N 1/00

(54) **TECHNIKEN ZUR EINHALTUNG VON PERSÖNLICHKEITSRECHTEN BEI FOTOAUFNAHMEN ODER VIDEOAUFNAHMEN VON PERSONEN**
TECHNIQUES FOR MAINTAINING PORTRAIT RIGHTS RELATED TO PHOTOGRAPHS OR VIDEO RECORDINGS OF PERSONS
TECHNIQUES POUR RESPECTER LES DROITS DE LA PERSONNE LORS DES PRISES DE PHOTOS OU DE PRISES DE VIDÉOS DES PERSONNES

(43) Veröffentlichungstag der Anmeldung: 10.01.2024
(73) Patentinhaber: Deutsche Telekom AG, 53113 Bonn (DE)
(72) Erfinder: Minow, Jascha, 64625 Bensheim (DE); Jahn, Carl, 65191 Wiesbaden (DE); El Mallouki, Said, 56329 St. Goar (DE)
(74) Vertreter: Braun-Dullaeus Pannen Emmerling Patent- & Rechtsanwaltspartnerschaft mbB

(56) Entgegenhaltungen:
- JP-A- 2005 110 004
- US-A1- 2010 277 611
- US-A1- 2013 156 331
- US-A1- 2014 140 575
- US-B1- 8 365 243

## Beschreibung

Die vorliegende Erfindung betrifft das technische Gebiet von Techniken zur Einhaltung von Persönlichkeitsrechten bei Fotoaufnahmen oder Videoaufnahmen von Personen und insbesondere ein Verfahren, ein Endgerät und ein Kommunikationssystem zur Einhaltung von Persönlichkeitsrechten bei Fotoaufnahmen oder Videoaufnahmen von Personen, wobei die Aufnahmen von einem Dritten und insbesondere ohne das Wissen der Person getätigt wurden.

Heutzutage werden mit zahlreichen Endgeräten Fotos gemacht und auch nahezu in jeder Situation. Insbesondere Smartphones sind in der Lage hochauflösende Fotos oder auch Videoaufnahmen aufzunehmen und diese quasi in Echtzeit in eine Cloud-Umgebung im Internet hochzuladen und diese damit potenziell der gesamten Erdbevölkerung zugänglich zu machen. Dies ist insbesondere dann problematisch, sowohl für den Nutzer, der die Aufnahme macht als auch für die Person die aufgenommen wird, wenn hierbei Persönlichkeitsrechte verletzt werden. Die Aufnahmen werden in der Regel im System des jeweiligen Anbieters der Cloud-Umgebung oder auch des Anbieters eines sozialen Netzwerks hinterlegt, verarbeitet oder mindestens in einem entsprechenden Nutzerspeicherbereich aufbewahrt. Eine automatisierte Löschung, insbesondere nach einer gewissen Zeit, ist nicht vorgesehen und wäre auch nicht immer ausreichend, um Persönlichkeitsrechte zu wahren. Die Verwaltung dieser Aufnahmen liegt im Regelfall bei dem Nutzer, der diese angefertigt hat. Bei vielen sozialen Netzwerken sind jedoch die Nutzungsrechte sehr aufgeweicht und manchmal sogar gänzlich an den Betreiber abgetreten.

Wie vorstehend schon angedeutet, ist es generell Sache des Nutzers, der die Aufnahmen angefertigt hat, darauf zu achten, dass er auch dazu berechtigt ist diese Aufnahmen zu machen bzw. in eine Cloud-Umgebung hochzuladen. Persönlichkeitsrechte, insbesondere einer dritten Person, die durch Videoaufnahmen oder Fotoaufnahmen verletzt werden sind mitunter nur schwer zu vermeiden oder zu kontrollieren. Eine solche Verletzung von Persönlichkeitsrechten kann zwar auf der Ignoranz des Nutzers, der die Aufnahme macht, basieren, es kann sich aber auch um ein Versehen handeln, wenn eine fremde Person im Moment der Aufnahme durchs Bild läuft.

Bisher gibt es kein praktikables Verfahren, um zu erfahren, ob man unberechtigterweise aufgenommen wurde. Selbst wenn man mitbekommt, dass man unberechtigterweise aufgenommen wurde, ist es sehr schwierig, diese Aufnahme sperren zu lassen. So erlaubt zwar ein Entwenden des Geräts, beispielsweise eines Smartphones, eine direkte Zerstörung dieser Aufnahme - allerdings hat dies entsprechende Straf- oder zivilrechtliche Konsequenzen zur Folge und kann im Einzelfall nicht mal verhindern, dass die Aufnahme eventuell bereits in einer Cloud-Umgebung eines sozialen Netzwerks, wie Instagram, gelandet ist.

Es bleibt also das Problem bestehen, wie verhindert werden kann, dass Aufnahmen, insbesondere Aufnahmen die Persönlichkeitsrechte verletzen, im Internet verbreitet werden und für alle Menschen zugänglich sind. Diese Problematik wird in Zukunft durch neuartige Geräte, die Videoaufnahmen und Fotoaufnahmen noch "beiläufiger" anfertigen können, sogar verstärkt. Als Beispiele werden diesbezüglich Augmented Reality Systeme, wie beispielsweise Smarte Brillen, genannt.

Die US 2013/156331 A1 beschreibt ein System zur Verwaltung und Freigabe von Bild- und Videodaten, das den Standort von Geräten erfasst, um die Privatsphäre von Personen zu schützen. Hierbei werden Metadaten, wie GPS-Daten und Zeitstempel, verwendet, um festzustellen, ob sich eine andere Person in der Nähe des Aufnahmeorts befand. Wenn dies der Fall ist, können Bilder blockiert oder modifiziert werden, beispielsweise durch Unkenntlichmachung. Die Metadaten werden dabei von verschiedenen Geräten gesammelt und an einen Freigabeserver zur Analyse weitergeleitet. Ein Algorithmus bestimmt, ob das Bild freigegeben oder eingeschränkt wird, basierend auf der Übereinstimmung der Standortdaten.

Die US 2014/140575 A1 beschreibt ein System zum Schutz der Privatsphäre bei Bild- und Videoaufnahmen, indem Personen oder Objekte in Bildern basierend auf Benutzereinstellungen unkenntlich gemacht werden. Das System kann Informationen über den Standort eines Geräts mithilfe von Triangulation über Mobilfunkbasisstationen oder GPS-Daten erfassen. Diese Informationen werden in einer Datenbank gespeichert, um festzustellen, ob eine Person erfasst wurde, die nicht gefilmt werden möchte. Auf dieser Grundlage kann das System die Aufnahmen modifizieren oder blockieren, um die Privatsphäre der Betroffenen zu schützen.

Die vorliegende Erfindung löst dieses Problem durch die Merkmale der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Einhaltung von Persönlichkeitsrechten bei Fotoaufnahmen oder Videoaufnahmen von Personen angegeben. Bei der Person handelt es sich insbesondere um eine dritte Person von der von einem Nutzer A mit seinem Endgerät A unberechtigterweise Fotos gemacht werden. Da diese dritte Person, wie nachstehend erläutert wird, ebenfalls ein Endgerät mit sich führt, wird diese dritte Person auch als Nutzer B bezeichnet. Das Verfahren umfasst die folgenden Schritte:
- Anfertigen der Fotoaufnahme oder Videoaufnahme durch einen Nutzer A auf seinem Endgerät A, wobei bei der Aufnahme ein erster Satz Metadaten generiert wird, der der Aufnahme zugeordnet sind, wobei der erste Satz Metadaten geeignet ist, um einen örtlichen Aufnahmebereich der Aufnahme zu charakterisieren;
   ∘ ganz allgemein kann eine Zuordnung von Metadaten zu einer Aufnahme mittels eines Tabelleneintrages realisiert werden, insbesondere kann eine Zuordnung zu einem Endgerät beispielsweise mittels einer eindeutigen ID des Endgeräts, beispielsweise einer SIM oder einer eSIM Nummer, realisiert werden. Dieser erste Satz Metadaten kann direkt von dem Endgerät generiert werden, beispielsweise wenn es sich um GPS Daten, also den Ort der Aufnahme, oder den Zeitpunkt der Aufnahme handelt. Es ist jedoch auch möglich, dass der erste Satz Metadaten, oder zumindest einige Parameter des Satzes von Metadaten, von dem Mobilfunkprovider generiert werden und der Aufnahme und/oder dem Endgerät A zugeordnet werden. Hierbei kann es sich beispielsweise um eine Identität der Funkzelle und/oder des Wi-Fi Netzwerkes handeln, über welches das Endgerät A kommuniziert und mit dem Kommunikationsnetzwerk, insbesondere dem Internet, Daten austauscht. Eine Möglichkeit ist allerdings auch, dass das Endgerät A die Identität der Funkzelle und/oder des Wi-Fi Netzwerkes übermittelt bekommt oder anfragt und dann wiederum eigenständig den ersten Satz von Metadaten generieren kann; beispielsweise sind sowohl GPS Daten als auch die Identität der Funkzelle (deren geographische Lage beim Mobilfunkprovider hinterlegt ist) geeignet, um einen örtlichen Aufnahmebereich zu charakterisieren. Ist beispielsweise die Identität der Funkzelle bekannt, ist es mit dem gegenwärtigen Auflösungsvermögen der onlinefähigen Endgeräte realistisch nur dann möglich Persönlichkeitsrechte einer Dritten zu Person zu verletzen, wenn sich diese in derselben Funkzelle oder in einer angrenzenden Funkzelle zum Zeitpunkt der Aufnahme aufgehalten hat, weil alle anderen Entfernungen einfach "zu groß" sind; in einer bevorzugten Ausführungsformen ist der Aufnahmebereich durch einen Sichtkegel repräsentiert;
- Generieren eines zweiten Satzes von Metadaten, wobei der zweite Satz Metadaten einem Endgerät B eines Nutzers B zugeordnet ist, wobei der zweite Satz Metadaten geeignet ist, um einen örtlichen Positionsbereich des Endgeräts B zu charakterisieren;
   ∘ wie vorstehend bei dem ersten Satz von Metadaten schon erwähnt kann auch der zweite Satz von Metadaten prinzipiell direkt von dem zweiten Endgerät und/oder von dem Mobilfunkprovider oder dem Roaminganbieter des Endgeräts B generiert werden; bei dem zweiten Satz von Metadaten kann es sich beispielsweise auch um GPS Daten des Endgeräts B handeln - im Gegensatz zu dem ersten Satz von Metadaten kann der zweite Satz von Metadaten weniger Informationen aufweisen, da dieser lediglich geeignet sein muss, um einen örtlichen Positionsbereich des Endgeräts B zu charakterisieren; ist also in einem bevorzugten Ausführungsbeispiel, der Aufnahmebereich durch einen Sichtkegel repräsentiert, so stellt der örtliche Positionsbereich des Endgeräts B lediglich einen Punkt dar, der innerhalb des Sichtkegels liegen kann;
- Weiterleiten des ersten Satzes Metadaten und des zweiten Satzes Metadaten an einen Aufnahmen-Freigabeserver, wobei auf dem Aufnahmen-Freigabeserver ein Lokalisierungsalgorithmus implementiert ist an den der erste Satz Metadaten und der zweite Satz Metadaten übergeben werden, wobei der Lokalisierungsalgorithmus eingerichtet ist zu bestimmen, ob sich das Endgerät B basierend auf einer Analyse der Metadaten in dem Aufnahmebereich der Aufnahme befindet.
   ∘ die Metadaten können direkt von den Endgeräten an den Aufnahmen-Freigabeserver Server weitergeleitet werden und/oder aber mittels des Mobilfunkproviders des jeweiligen Endgeräts und/oder durch den Betreiber einer Cloud-Umgebung oder des sozialen Netzwerks; erfindungsgemäß hat der Mobilfunkprovider des Endgeräts B Kenntnis mit welchen Funkzellen das Endgerät B zu welchen Zeitpunkten verbunden war und übermittelt diese Information an den Aufnahmen-Freigabeserver. Der Vorteil hiervon ist, dass das Endgerät B nicht durch das Anfertigen einer Aufnahme durch das Endgerät A zu einer Datenkommunikation "genötigt" wird;
   ∘ in einer sehr einfachen Ausführungsform kann der Lokalisierungsalgorithmus feststellen, dass sich das Endgerät B in dem Aufnahmebereich der Aufnahme des Endgeräts A befindet, wenn der Abstand der GPS Koordinaten des ersten Satzes an Metadaten und des zweiten Satzes an Metadaten, insbesondere innerhalb eines bestimmten Zeitfensters, kleiner als ein vorgegebener Schwellenwert, beispielsweise 25 m, ist. In einer anderen Ausführungsform kann der Lokalisierungsalgorithmus feststellen, dass das Endgerät B in dem Aufnahmebereich der Aufnahme des Endgeräts A befindet, wenn sich das Endgerät B in derselben Funkzelle oder in einer benachbarten Funkzelle aufhält, wenn die Aufnahme getätigt wurde. Diese einfachen Fälle berücksichtigen allerdings noch nicht die Orientierung des Endgeräts A zum Zeitpunkt der Aufnahme, sodass in diesen Fällen bei zu vielen Aufnahmen festgestellt werden würde, dass sich das Endgerät B in dem Aufnahmebereich der Aufnahme befindet; jedenfalls würde dies aber trotzdem eine Möglichkeit bereitstellen, um alle Aufnahmen zu finden in denen sich der Nutzer des Endgeräts B befindet;

Das Verfahren bietet also den Vorteil, dass eine zentrale Instanz verwendet wird, nämlich der Aufnahmen-Freigabeserver, der automatisiert feststellen kann, ob sich eine dritte Person in einem Aufnahmebereich befindet. Das Verfahren macht sich die Erkenntnis zugrunde, dass im Regelfall heutzutage fast jede Person ein Endgerät mit sich trägt, das geeignet ist den zweiten Satz Metadaten zur automatisierten Analyse bereitzustellen. Dementsprechend wird die dritte Person als Nutzer B mit dem Endgerät B bezeichnet. Nutzer können sich beispielsweise bei dem Aufnahmen-Freigabeserver registrieren, um an dem Verfahren teilzunehmen bzw. dieses individuell anzupassen. Dies gilt ebenfalls für Betreiber von Cloud-Umgebungen und/oder online sozialen Netzwerken, wobei die Teilnahme für die Letzteren auch verpflichtend vorgegeben sein kann. Wird erfindungsgemäß festgestellt, dass sich eine dritte Person in einem Aufnahmebereich befindet, handelt es sich also potenziell um eine Verletzung von Persönlichkeitsrechten, sodass weitere Maßnahmen ergriffen werden können.

Der Erfindung liegt zudem die Erkenntnis zugrunde, dass es hierzu nicht unbedingt notwendig ist, die eigentlichen Bilddaten der Aufnahme zu übersenden, sondern, dass es ausreicht, die entsprechenden Sätze an Metadaten zu übertragen und zu analysieren. Indem auf die Übersendung der Bilddaten verzichtet wird, wird der Datentransfer in dem Kommunikationsnetzwerk deutlich reduziert, sodass Ressourcen effizient geschont werden.

Wenn das Endgerät A den ersten Satz Metadaten und/oder das Endgerät B den zweiten Satz Metadaten selbst generiert, können der entsprechend generierte erste Satz Metadaten und/oder der zweite Satz Metadaten von dem Endgerät A und/oder dem Endgerät B an den Mobilfunkprovider, den Betreiber der Cloud-Umgebung, den Betreiber des sozialen Netzwerks und/oder an den Aufnahmen-Freigabeserver Server weitergeleitet werden. Diese Flexibilität ermöglicht es, die Daten im Folgenden möglichst effizient zu nutzen.

Es kann von Vorteil sein, wenn die Metadaten von dem Mobilfunkprovider und/oder durch den Betreiber der Cloud-Umgebung oder des online sozialen Netzwerks an den Aufnahmen-Freigabeserver Server weitergeleitet werden, da sonst jede Datenkommunikation von den Endgeräten zunächst über den Aufnahmen-Freigabeserver Server führen müsste, wodurch zusätzliche Datentraffic erzeugt werden würde und sich die Latenz der Kommunikation der Endgeräte erhöhen würde. Die Mobilfunkprovider, die Betreiber der Cloud-Umgebung und/oder Betreiber des sozialen Netzwerks können die Metadaten zielgerichteter an den Aufnahmen-Freigabeserver Server weiterleiten. Beispielsweise könnte der Betreiber der Cloud-Umgebung oder der Betreiber des online sozialen Netzwerks den Mobilfunkprovidern Funkzellen senden in denen Aufnahmen getätigt wurden, die dem ersten Satz von Metadaten zugeordnet sind. Hieraufhin kann der Mobilfunkprovider in seinen Datenbanken nachschauen, welche Endgeräte B sich in dem fraglichen Zeitraum in dieser Funkzelle oder einer angrenzenden Funkzelle aufgehalten haben und gezielt nur diese Metadaten an den Aufnahmen-Freigabeserver Server senden.

Zweckmäßigerweise wird die Aufnahme gesperrt und/oder gelöscht, falls sich das Endgerät B in dem örtlichen Aufnahmebereich der Aufnahme befindet. Sowohl das Sperren als auch das Löschen sind effiziente Methoden, um zu verhindern, dass die Aufnahme in soziale Netzwerke oder in eine Cloud-Umgebung gelangt. Bei dem Sperren besteht prinzipiell die Möglichkeit, dass der Nutzer B angefragt wird und das Foto manuell freigeben kann, wobei bei dem Löschen in vorteilhafter Weise Speicherplatz geschaffen wird und zudem sichergestellt wird, dass das Foto nicht auf eine andere Art und Weise in die Cloud-Umgebung oder in ein soziales Netzwerk gelangt.

In einer bevorzugten Ausführungsformen berechnet der Lokalisierungsalgorithmus einen Score, der einer Wahrscheinlichkeit entspricht, dass sich das Endgerät B in dem Aufnahmebereich der Aufnahme befindet, wobei die Aufnahme gelöscht und/oder gesperrt wird, falls der Score einen Schwellenwert überschreitet. Ein solcher Score, der auf einem Wahrscheinlichkeitswert basiert, bietet den Vorteil, dass der Schwellenwert auch, insbesondere dynamisch, verändert werden kann. Zudem ermöglicht es einem Nutzer B, den Schwellenwert für sich individuell einzustellen, wenn er an diesem Verfahren teilnimmt. Will der Nutzer B sicherstellen, dass er auf dem Foto wirklich überhaupt nicht zu erkennen ist, so kann er den Schwellenwert niedriger ersetzen, wobei der Nutzer B den Schwellenwert höher setzen kann, wenn ihm seine Privatsphäre nicht so wichtig ist.

Der Lokalisierungsalgorithmus kann einen Steuerbefehl zum Löschen der Aufnahme generieren und diesen Steuerbefehl an das Endgerät A übertragen, wobei das Endgerät A beim Empfang des Steuerbefehls die Aufnahme lokal löscht.

Dies hat den Vorteil, dass sichergestellt wird, dass alle Kopien der Aufnahme, die Persönlichkeitsrechte verletzen, zuverlässig gelöscht werden und nicht auf andere Weise anderen zugänglich gemacht werden.

Es ist möglich, dass die Aufnahme durch den Aufnahmen-Freigabeserver freigegeben wird, falls das Endgerät A auf dem Aufnahmen-Freigabeserver in einer White-List, insbesondere in einer White-List des Nutzers B, hinterlegt ist. Falls die Abfrage der entsprechenden White-List vor der Analyse durch den Lokalisierungsalgorithmus durchgeführt wird, kann auf die Analyse des Lokalisierungsalgorithmus verzichtet werden. Endgeräte können beispielsweise mittels ihrer Telefon, SIM und/oder eSIM Nummer in der White-List bekannt gemacht werden. So kann beispielsweise Nutzer B, Nutzer A, insbesondere falls dieser ein Familienmitglied oder ein Bekannter ist, in der White-List bekannt machen, sodass dessen Aufnahmen nicht gesperrt oder gelöscht werden. Auf der anderen Seite könnten beispielsweise Journalisten in globalen White-Lists bekannt gemacht werden, sodass deren Aufnahmen (da diese ja eventuell von gesellschaftlicher Relevanz sein könnten) auf jeden Fall nicht gesperrt werden.

Der Aufnahmen-Freigabeserver kann ein Kommunikationsinterface aufweisen, das es Nutzern ermöglicht Einstellungen auf dem Aufnahmen-Freigabeserver vorzunehmen. Das Kommunikationsinterface kann beispielsweise durch eine Webseite realisiert werden.

In einer bevorzugten Ausführungsformen können die Metadaten umfassen:
- einen Zeitstempel der Fotoaufnahmen oder ein Zeitfenster der Videoaufnahme,
   ∘ durch eine Verwendung von Zeitinformationen kann die Anzahl der möglicherweise relevanten Fälle effizient verkleinert werden. Zudem bietet die Zeitinformation ein sehr effektives Ausschlusskriterium, ob eine Person auf einer Aufnahme zu sehen ist. Befindet sich die Person nämlich zur Zeitpunkt der Aufnahme an einer völlig anderen örtlichen Position, kann nahezu ausgeschlossen werden, dass die Person auf der Aufnahme zu sehen ist;
- GPS Positionen des Endgeräts A und/oder des Endgeräts B,
   ∘ GPS Positionen können von Endgeräten, wie beispielsweise Smartphones, Tablets und/oder anderen Wearables übertragen bzw. zu Aufnahme zugeordnet werden und sind in der Lage die örtliche Position der jeweiligen Endgeräte bzw. der Aufnahme bis auf wenige Meter genau zu bestimmen;
- genutzte Funkzellen des Endgeräts A und/oder des Endgeräts B
   ∘ diese Informationen können insbesondere im normalen "Betriebsmodus" der Endgeräte von den Mobilfunkanbietern gewonnen werden ohne dass hierzu ein extra eingerichteter Datenaustausch stattfinden muss. Mithilfe der Informationen über die genutzte Funkzelle kann bestimmt werden, ob sich Endgerät B und Endgerät A, insbesondere zum Zeitpunkt der Aufnahme, in derselben oder in angrenzenden Funkzellen befunden haben. Diese Informationen können auch zwischen verschiedenen Mobilfunkprovidern ausgetauscht werden. Insbesondere kann eine zentrale Tabelle hinterlegt sein, die Funkzellen und deren angrenzenden Funkzellen wiedergibt.
- digitale Kompassdaten des Endgeräts A, und/oder
- Gyroskop-Daten des Endgeräts A.
   ∘ Die Daten des digitalen Kompasses und/oder die Gyroskop-Daten können verwendet werden, um die Richtung zu bestimmen in die das Endgerät A zum Zeitpunkt der Aufnahme gerichtet ist. Hierbei muss natürlich berücksichtigt werden, ob die Aufnahme mit der Vor-r oder der Rückseitigen-Kamera des Endgeräts getätigt wird.

Werden insbesondere alle die vorstehend aufgezählten Metadaten verwendet, kann ein zeitlich aufgelöster Aufnahmekegel generiert werden.

In einer bevorzugten Ausführungsform werden zusätzlich zu dem ersten Satz von Metadaten die Bilddaten der Aufnahme weitergeleitet.

Dies bietet den Vorteil, dass die Bilddaten für eine weitere Analyse nutzbar gemacht werden. Beispielsweise kann es sein, dass sich Nutzer B zwar im zeitlich aufgelösten Sichtkegel der Aufnahme aufhält, dass Nutzer B aber durch andere Personen oder Gegenstände verdeckt oder zumindest unkenntlich gemacht ist, sodass dessen Persönlichkeitsrechte nicht verletzt werden.

In einer Weiterbildung des Verfahrens können die Bilddaten der Aufnahme von dem Lokalisierungsalgorithmus mit auf dem Aufnahmen-Freigabeserver hinterlegten Bilddaten des Nutzers B verglichen werden, um festzustellen, ob sich der Nutzer B auf den Aufnahmen befindet. Hierzu können geeignete Bilderkennungsprogramme verwendet werden. Dies bietet den Vorteil, dass reale Aufnahmen des Nutzers B, nämlich dessen hinterlegte Bilddaten, verwendet werden, um festzustellen, ob sich der Nutzer auf der Aufnahme befindet. Indem aber zuvor ein zeitaufgelöster Sichtkegel bestimmt wird kann eine große Anzahl von Aufnahmen in einem ersten Schritt herausgefiltert werden, bevor ein rechenaufwändiger Bildvergleich durchgeführt wird.

Zweckmäßigerweise bekommt der Nutzer B die Bilddaten der Aufnahme zugesendet, falls der Lokalisierungsalgorithmus feststellt, dass der Nutzer B auf der Aufnahme auftaucht, wobei der Nutzer B die Aufnahme manuell freigeben kann.

Dies bietet den Vorteil, dass die Aufnahme auch dann verwendet werden kann, wenn der Nutzer B auf der Aufnahme zu sehen ist. In diesem Sinne erteilt der Nutzer B gewissermaßen die Freigabe zur Nutzung seiner Fotorechte.

Der Aufnahmen-Freigabenserver kann einer Cloud Umgebung zum Speichern der Aufnahmen logisch vorgeschaltet sein oder der Aufnahmen-Freigabenserver kann der Cloud Umgebung zugeordnet sein.

Ist der Aufnahmen-Freigabenserver einer Cloud Umgebung vorgeschaltet, so kann sogar verhindert werden, dass die Aufnahmen zu der Cloud Umgebung gelangen. Gelangen die Bilder nämlich einmal in eine Cloud Umgebung könnte es fraglich sein, ob dann überhaupt noch ein technischer Zugriff auf die Aufnahmen möglich ist, sodass diese gesperrt oder gelöscht werden können. Ist der Aufnahmen-Freigabenserver einer Cloud Umgebung zugeordnet, kann die Cloud Umgebung dem Aufnahmen-Freigabenserver effizient die Aufnahmen zu Überprüfung bereitstellen. Dieser Fall ist insbesondere dann möglich, wenn der Anbieter einer Cloud Umgebung kooperativ mit dem Aufnahmen-Freigabenserver zusammenarbeitet. Insbesondere ist es möglich, dass der Aufnahmen-Freigabenserver von einer staatlichen Institution betrieben wird.

Zweckmäßigerweise wird der Aufnahmen-Freigabenserver in einer sicheren IT-Umgebung bereitstellt. Dies bietet den Vorteil, dass eine Verletzung von Persönlichkeitsrechten ausgeschlossen wird, solange sich die Aufnahmen auf dem Aufnahmen-Freigabenserver befinden, wobei die Aufnahmen im Fall, dass Persönlichkeitsrechte verletzt werden, den Aufnahmen-Freigabenserver nie verlassen, sondern direkt auf dem Aufnahmen-Freigabenserver gelöscht werden.

Es ist ein Endgerät offenbart, wobei das Endgerät eingerichtet ist zum i) Genieren eines ersten und/oder eines zweiten Satzes von Metadaten und ii) zum Weiterleiten des ersten und/oder eines zweiten Satzes von Metadaten zu einem Aufnahmen-Freigabenserver.

Ein solches Endgerät ermöglicht es, das vorstehend beschriebene Verfahren durchzuführen und die Vorteile des Verfahrens nutzen zu können. Entsprechend eingerichtete Endgeräte können Smartphones, Tablets, Wearables, Ar-Brillen, Fotoapparat oder ähnliche Endgeräte sein.

Vorzugsweise ist das Endgerät zum Empfangen eines Steuerbefehls zum Löschen einer der des ersten Satzes von Metadaten zugeordneten Aufnahme eingerichtet und eingerichtet zum lokalen Löschen der Aufnahme.

Hierdurch wird ermöglicht, dass eine Aufnahme die Persönlichkeitsrechte verletzt, wobei die Verletzung durch den Aufnahmen-Freigabenserver festgestellt wurde, automatisiert von dem Endgerät gelöscht werden können.

Gemäß einem zweiten Aspekt der Erfindung ist ein Kommunikationssystem zur Einhaltung von Persönlichkeitsrechten bei Fotoaufnahmen oder Videoaufnahmen von Personen angegeben, wobei das Kommunikationssystem umfasst:
- ein Endgerät A eines Nutzers A, insbesondere ein Endgerät A nach dem zweiten Aspekt der Erfindung, und ein Endgerät B eines Nutzers B, insbesondere ein Endgerät B nach dem zweiten Aspekt der Erfindung;
- ein Aufnahmen-Freigabeserver;
- ein Kommunikationsnetzwerk, wobei die Endgeräte zumindest mittelbar über das Kommunikationsnetzwerk zumindest Metadaten mit dem Aufnahmen-Freigabeserver austauschen;
- wobei das Kommunikationssystem eingerichtet ist zur Ausführung der Schritte des vorstehend beschriebenen Verfahrens. Insbesondere ist auf dem Aufnahmen-Freigabeserver der Lokalisierungsalgorithmus implementiert.

Dieses Kommunikationssystem bietet die Vorteile, welche schon im Zusammenhang mit dem Verfahren beschrieben wurden.

Zweckmäßigerweise umfasst das Kommunikationssystem eine Cloud Umgebung zum Speichern von Aufnahmen, wobei die Cloud Umgebung vermittels des Kommunikationsnetzwerks mit dem Aufnahmen-Freigabeserver in einer Datenverbindung steht, wobei der Aufnahmen-Freigabeserver in Datenrichtung logisch vor der Cloud Umgebung angeordnet ist.

Hierdurch wird auf vorteilhafte Weise sichergestellt, dass keine Aufnahmen, die Persönlichkeitsrechte verletzen auf die Cloud Umgebung gelangen.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1:: zeigt ein erfindungsgemäßes Kommunikationssystem zur Einhaltung von Persönlichkeitsrechten bei Fotoaufnahmen oder Videoaufnahmen.
- Fig. 2:: zeigt das erfindungsgemäße Verfahren zur Einhaltung von Persönlichkeitsrechten.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

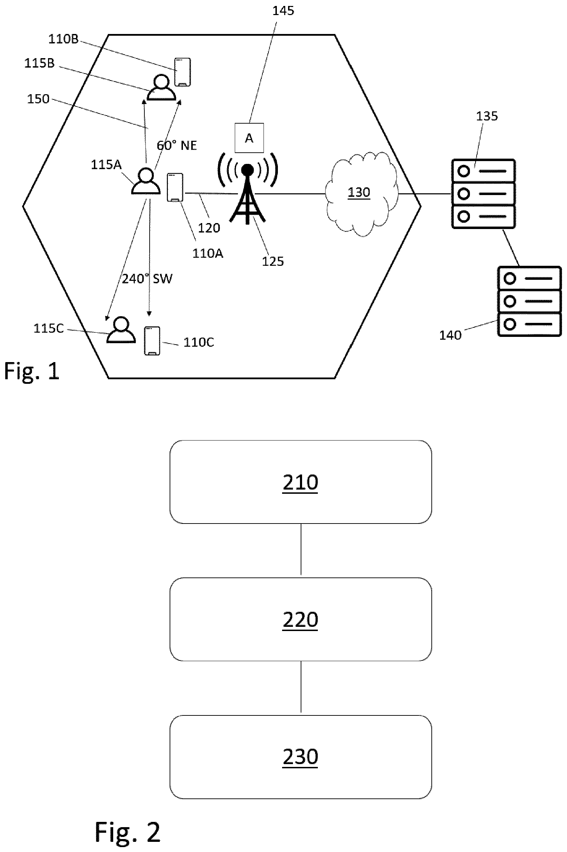

Fig. 1 zeigt eine Ausführungsform eines erfindungsgemäßen Kommunikationssystems 100 zur Einhaltung von Persönlichkeitsrechten bei Fotoaufnahmen oder Videoaufnahmen.

Das Kommunikationssystem 100 umfasst Endgeräte 110A, B, C, die jeweils Nutzern 115A, B, C zugeordnet sind. Die Endgeräte 110A, B, C, die vorzugsweise als Smartphones 110A, B, C ausgebildet sind, stehen mit einer Basisstation 125 in einer Kommunikationsverbindung 120, insbesondere in einer Funkverbindung 120. Die Basisstation 125 kann einem Mobilfunkprovider zugeordnet sein und stellt die Verbindung der Endgeräte 110A, B, C zu einem Kommunikationsnetzwerk 130, insbesondere dem Internet 130, bereit. Der räumliche Funkabdeckungsbereich der Basisstation 125 bildet eine Funkzelle A 145 aus. Über das Kommunikationsnetzwerk 130 können die Endgeräte 110A, B, C Daten mit einem Aufnahmen-Freigabeserver 135, insbesondere einem DRM Watcher Service 135, austauschen. Insbesondere können die Endgeräte 110A, B, C Metadaten und/oder Bilddaten von Aufnahmen an den Aufnahmen-Freigabeserver 135 übermitteln.

Der Aufnahmen-Freigabeserver 135 kann überprüfen, was nachstehend noch im Detail beschrieben ist, ob auf den Aufnahmen Persönlichkeitsrechte Dritter verletzt wurden und hieraufhin festlegen, ob die Aufnahmen an eine Cloud Umgebung 140, insbesondere ein soziales Netzwerk 140, weitergeleitet werden dürfen oder die Aufnahmen für eine Weiterleitung gesperrt werden.

Konkret kann dies wie folgt ablaufen:
Eine Nutzerin A mit dem Namen Hanna befindet sich mit ihrem Smartphone 110A in einer Funkzelle A und macht mit ihrem Smartphone 110A eine Fotoaufnahme oder ein Video.

Das Smartphone 110A ermittelt seine Geolokation zum Zeitpunkt der Aufnahme. Hierzu gibt es verschiedene Möglichkeiten die eigene Geolokation zu bestimmen. In einer Ausführungsform wird die Geolokation über die genutzte Funkzelle A ermittelt, die insbesondere dem Mobilfunkbetreiber bekannt ist. Es ist auch möglich, die eigene Geolokation für die Bildaufnahme als Längen- und Breitengrad zu bestimmen. Zusätzlich kann das Smartphone 110A mithilfe eines in ihm eingebauten digitalen Kompasses eine Richtung der Aufnahme bestimmen. In Fig. 1 wird beispielsweise eine Aufnahme in Richtung 60° Nord Ost gemacht. Das Smartphone 110A kann zusätzlich mithilfe eines eingebauten Gyroskopsensors die Lage des Smartphones 110A im Raum ermitteln, also zum Beispiel ob die Kamera nach oben, nach vorne, nach hinten oder zur Seite gerichtet ist.

All diese Informationen oder auch nur eine Teilmenge dieser Informationen werden mit der getätigten Aufnahme verknüpft und über das Kommunikationsnetzwerk 130 an den Aufnahmen-Freigabeserver 135 übermittelt. Mit der Übermittlung dieser Daten kann die Aufforderung einhergehen, die Aufnahme bezüglich einer Verletzung von Persönlichkeitsrechten von zufällig in der Fotorichtung befindlichen Personen zu überprüfen.

Der Aufnahmen-Freigabeserver 135 weist einen Lokalisierungsalgorithmus auf, der eingerichtet ist zu überprüfen, ob Persönlichkeitsrechte von zufällig in der Fotorichtung befindlichen Personen verletzt wurden. Hierzu kann der Aufnahmen-Freigabeserver 135 das HLR (Home Location Register) und/oder das VLR (Visitor Location Register) des Mobilfunkbetreibers bzw. der Mobilfunkbetreiber, anfragen, ob sich in der Funkzelle in der die Aufnahmen getätigt wurde, also vorliegende Funkzelle A, andere Nutzer befunden bzw. deren Endgeräte 110B, C zum Zeitpunkt der Aufnahme befunden haben.

Insbesondere kann ermittelt werden, ob die Endgeräte 110B, C zum Zeitpunkt der Aufnahme einen Längen- und Breitengrad aufweisen, der sich nicht weiter als 25 m von dem Längen und Breitengrad der getätigten Aufnahme entfernt befindet und ob sich die Endgeräte 110B, C in ca. 240° südwestlicher Richtung (60° nordöstlicher Richtung aus Sicht des aufnehmender, siehe Figur 1) befinden, sodass sich diese potenziell auf der Aufnahme finden können. Durch die Verwendung von Gyroskopdaten kann zudem ermittelt werden, ob sich die Endgeräte 110B, C im Sichtfeld der Kamera des Smartphones 110A befinden. Aus den vorstehend beschriebenen Daten kann ein Punkt im Raum mit einem entsprechenden Vektor gebildet werden, wobei der Vektor einen Sichtkegel repräsentieren kann und dadurch vorgibt, innerhalb welchen Korridors sich potenziell dritte Person befunden haben müsste, um auf der Aufnahme zu sehen zu sein.

Fig. 1 zeigt, dass sich Nutzer 115B mit seinem Smartphone 110B ebenfalls innerhalb derselben Funkzelle A 145, wie Nutzer 115A aufhält. Die Informationen, dass sich Nutzer 115B mit seinem Smartphone 110B, insbesondere zum Zeitpunkt der Aufnahme, ebenfalls in der Funkzelle A 145 aufgehalten hat, kann beispielsweise von dem Mobilfunkprovider abgefragt bzw. von diesem signalisiert werden. Wird diese Informationen dem Aufnahmen-Freigabeserver 135 übermittelt, kann der Lokalisierungsalgorithmus feststellen, dass sich der Nutzer 115B zum Zeitpunkt der Aufnahme in dem örtlichen Aufnahmebereich 150 der Aufnahme befunden hat.

Mit den vorliegenden Daten basiert diese Feststellung allerdings lediglich auf der Übereinstimmung der Funkzellen. Um eine genauere Analyse vornehmen zu können, da es durchaus sein kann, dass sich der Nutzer 115B zwar in derselben Funkzelle A befindet aber trotzdem nicht auf der Aufnahme auftaucht, kann es von Vorteil sein, werden durch das das Smartphone 110B weitere Information übermittelt.

Das Smartphone 110B kann für die genauere Analyse eine Anfrage bezüglich weiterer Informationen, insbesondere in der Form von Metadaten, von dem Aufnahmen-Freigabeserver 135 erhalten. Das Smartphone 110B ermittelt in der Folge seinen eigenen Längen und Breitengrad und kann diese Informationen an den Aufnahmen-Freigabeserver 135 übermitteln, wo der Lokalisierungsalgorithmus festgestellt, ob sich die Aufnahme beispielsweise weniger als 25 m von der Position des Smartphones 110A befindet. Im vorliegenden Fall ist das Smartphone 110B 2 m von der Position des Smartphones 110A entfernt.

Zudem kann der Lokalisierungsalgorithmus mit den der Aufnahme zugeordneten Metadaten bestimmen, ob sich das Smartphone 110B zum Zeitpunkt der Aufnahme im Sichtkegel 150 der Aufnahme befunden hat. Ist dies der Fall, kann die Aufnahme von dem Aufnahmen-Freigabeserver 135 gesperrt und/oder die Löschung der Aufnahme durch die Generierung eines entsprechenden Signals vorgenommen werden. Das Smartphone 110B kann die Option aufweisen, bestimmte Privatpräferenzen des Nutzers 115B an den Aufnahmen-Freigabeserver 135 zu senden. Beispielsweise kann Nutzer 115B Aufnahmen, die seine Familienmitglieder von ihm machen, pauschal durch ein IMSI Whitelisting Verfahren freigegeben. Aufnahmen andere Personen, deren IMSI sich nicht in der White List befindet, sind pauschal abzulehnen und nicht zu genehmigen.

Fig. 1 zeigt zudem einen weiteren Nutzer 115C, der sich mit seinem Smartphone 110C ebenfalls innerhalb derselben Funkzelle A wie Nutzer 115A befindet. Hierauf hin kann auch das Smartphone 110C eine Anfrage von dem Aufnahmen-Freigabeserver 135 erhalten, weil Nutzer 115A eine Aufnahme angefertigt. Das Smartphone 110C ermittelt seine Längen- und Breitengrade, die sich im vorliegenden Fall mehr als 25 m von der Position des Smartphones 110A befinden, konkret 30 m. Zudem ermittelt das Smartphone 110C, dass es sich außerhalb des möglichen Aufnahmewinkels von 60° Nord-Ost befindet (nämlich 240° Südwesten und damit genau in entgegengesetzte Richtung). Diese Informationen meldet das Smartphone 110C an den Aufnahmen-Freigabeserver 135. Zudem kann das Smartphone 110C die Privatpräferenzen von Nutzer 115C übermitteln. Selbst wenn die Privatpräferenzen besagen, dass keine Film- oder Fotoaufnahmen von Nutzer 115C gestattet sind, werden diese trotzdem freigegeben, da sich das Smartphone 110C im vorliegenden Fall mehr als 25 m entfernt von der Position des Smartphones 110A zum Zeitpunkt der Aufnahme befindet.

Der Aufnahmen-Freigabeserver 135 vergleicht die an ihn übermittelten Informationen und berechnet hieraus einen sogenannten Personal-Rights-Violation-Score (PRVS). Wie schon vorstehend erwähnt kann der PRVS auf Informationen der Geolokation und/oder der Richtung der Film oder Fotoaufnahmen basieren. Zudem kann der PRVS die persönlichen Privatsphärenpräferenzen berücksichtigen und das Ergebnis an die Smartphones 110 B,C zurückmelden. Der Score entspricht einer Wahrscheinlichkeit mit der sich auf der gemachten Aufnahme eine Person befindet, welche das Speichern bzw. Darstellen der Aufnahme in der Cloud verhindern möchte.

Fig. 2 zeigt das erfindungsgemäße Verfahren 200 zur Einhaltung von Persönlichkeitsrechten. Das Verfahren kann in dem Kommunikationssystem 100 implementiert sein und die folgenden Schritte umfassen:
Schritt 210: Anfertigen der Fotoaufnahme oder Videoaufnahme durch einen Nutzer A auf seinem Endgerät 110A, wobei bei der Aufnahme ein erster Satz Metadaten generiert werden, die der Aufnahme zugeordnet sind, wobei der erste Satz Metadaten geeignet ist, um einen örtlichen Aufnahmebereich der Aufnahme zu charakterisieren;
Schritt 220: Generieren eines zweiten Satzes von Metadaten, wobei der zweite Satz Metadaten einem Endgerät 110B eines Nutzers B zugeordnet ist, wobei der zweite Satz Metadaten geeignet ist, um einen örtlichen Positionsbereich des Endgeräts 110B zu charakterisieren;
Schritt 230: Weiterleiten des ersten Satzes Metadaten und des zweiten Satzes Metadaten an einen Aufnahmen-Freigabeserver, wobei auf dem Aufnahmen-Freigabeserver ein Lokalisierungsalgorithmus implementiert ist an den der erste Satz Metadaten und der zweiten Satz Metadaten übergeben werden, wobei der Lokalisierungsalgorithmus eingerichtet ist zu bestimmen, ob sich das Endgerät 110B basierend auf einer Analyse der Metadaten in dem örtlichen Aufnahmebereich der Aufnahme befindet.

## Patentansprüche

1. Verfahren zur Einhaltung von Persönlichkeitsrechten bei Fotoaufnahmen oder Videoaufnahmen von Personen umfassend die folgenden Schritte:
• Anfertigen der Fotoaufnahme oder Videoaufnahme durch einen Nutzer A (115A) auf seinem Endgerät A (110A), wobei bei der Aufnahme ein erster Satz Metadaten generiert werden, die der Aufnahme zugeordnet sind, wobei der erste Satz Metadaten geeignet ist, um einen örtlichen Aufnahmebereich der Aufnahme zu charakterisieren;
• Generieren eines zweiten Satzes von Metadaten, wobei der zweite Satz Metadaten einem Endgerät B (110B) eines Nutzers B (115B) zugeordnet ist, wobei der zweite Satz Metadaten geeignet ist, um einen örtlichen Positionsbereich des Endgeräts B (115B) zu charakterisieren;
• Weiterleiten des ersten Satzes Metadaten und des zweiten Satzes Metadaten an einen Aufnahmen-Freigabeserver (135), wobei auf dem Aufnahmen-Freigabeserver (135) ein Lokalisierungsalgorithmus implementiert ist an den der erste Satz Metadaten und der zweiten Satz Metadaten übergeben werden, wobei der Lokalisierungsalgorithmus eingerichtet ist zu bestimmen, ob sich das Endgerät B (110B) basierend auf einer Analyse der Metadaten in dem örtlichen Aufnahmebereich der Aufnahme befindet,
**dadurch kennzeichnet,**
**dass** der zweite Satz von Metadaten Informationen umfasst mit welchen Funkzellen das Endgerät B zu welchen Zeitpunkten verbunden war, wobei ein dem Endgerät zugeordneter Mobilfunkprovider dem Aufnahmen-Freigabeserver (135) übermittelt mit welchen Funkzellen das Endgerät B zu welchen Zeitpunkten verbunden war.

2. Verfahren nach Anspruch 1, wobei die Aufnahme gesperrt und/oder gelöscht wird, falls sich das Endgerät B (110B) in dem örtlichen Aufnahmebereich der Aufnahme befindet.

3. Verfahren nach einem der vorhergehenden Ansprüche, wobei der Lokalisierungsalgorithmus einen Score berechnet, der einer Wahrscheinlichkeit entspricht, dass sich das Endgerät B (110B) in dem Aufnahmebereich der Aufnahme befindet, wobei die Aufnahme gelöscht und/oder gesperrt wird, falls der Score einen Schwellenwert überschreitet.

4. Verfahren nach einem der Ansprüche 2 bis 3, wobei der Lokalisierungsalgorithmus einen Steuerbefehl zum Löschen der Aufnahme generiert und dieser Steuerbefehl an das Endgerät A (110A) übertragen wird, wobei das Endgerät A (110A) beim Empfang des Steuerbefehls die Aufnahme lokal löscht.

5. Verfahren nach einem der vorhergehenden Ansprüche, wobei die Aufnahme freigegeben wird, falls das Endgerät A (110A) auf dem Aufnahmen-Freigabeserver in einer White-List hinterlegt ist.

6. Verfahren nach einem der vorhergehenden Ansprüche, wobei Metadaten umfassen:
• einen Zeitstempel der Fotoaufnahmen oder ein Zeitfenster der Videoaufnahme,
• GPS Positionen des Endgeräts A (110A) und/oder des Endgeräts B (110B),
• genutzte Funkzellen des Endgeräts A (110A) und/oder des Endgeräts B (110B), digitale Kompassdaten des Endgeräts A (110A), und/oder
• Gyroskop-Daten des Endgeräts A (110A).

7. Verfahren nach einem der vorhergehenden Ansprüche, wobei zusätzlich zu dem ersten Satz von Metadaten die Bilddaten der Aufnahme weitergeleitet werden.

8. Verfahren nach Anspruch 7, wobei die Bilddaten der Aufnahme von dem Lokalisierungsalgorithmus mit auf dem Aufnahmen-Freigabeserver (135) hinterlegten Bilddaten des Nutzers B (115B) verglichen werden, um festzustellen, ob sich der Nutzer B (115B) auf den Aufnahmen befindet.

9. Verfahren nach einem der Ansprüche 7 bis 8, wobei der Nutzer B (115B) die Bilddaten der Aufnahme zugesendet bekommt, falls der Lokalisierungsalgorithmus feststellt, dass der Nutzer B (115B) auf der Aufnahme auftaucht, wobei der Nutzer B (115B) die Aufnahme manuell freigeben kann.

10. Verfahren nach einem der vorhergehenden Ansprüche, wobei der Aufnahmen-Freigabenserver (135) einer Cloud Umgebung (140) zum Speichern der Aufnahmen logisch vorgeschaltet und/oder der Cloud Umgebung (140) zugeordnet ist.

11. Verfahren nach einem der vorhergehenden Ansprüche, wobei der Aufnahmen-Freigabenserver eine sichere IT-Umgebung bereitstellt.

12. Kommunikationssystem zur Einhaltung von Persönlichkeitsrechten bei Fotoaufnahmen oder Videoaufnahmen von Personen umfassend
• ein Endgerät A eines Nutzers A und ein Endgerät B eines Nutzers B;
• ein Aufnahmen-Freigabeserver (135);
• ein Mobilfunkprovider;
• ein Kommunikationsnetzwerk (130), wobei die Endgeräte zumindest mittelbar über das Kommunikationsnetzwerk zumindest Metadaten mit dem Aufnahmen-Freigabeserver austauschen;
• wobei das Kommunikationssystem (100) eingerichtet ist zur Ausführung der Schritte des Verfahrens nach einem der Ansprüche 1-11.

13. Kommunikationssystem nach Anspruch 12 umfassend eine Cloud Umgebung zum Speichern von Aufnahmen, wobei die Cloud Umgebung vermittels des Kommunikationsnetzwerks mit dem Aufnahmen-Freigabeserver in einer Datenverbindung steht, wobei der Aufnahmen-Freigabeserver in Datenrichtung logisch vor der Cloud Umgebung angeordnet ist.

## Claims

1. Method for maintaining portrait rights related to photographs or video recordings of persons, comprising the following steps:
- Preparing the photograph or video recording by a user A (115A) on their terminal device A (110A), wherein a first set of metadata is generated during the recording, and is assigned to the recording, wherein the first set of metadata is suitable for characterizing a local recording area of the recording;
- Generating a second set of metadata, wherein the second set of metadata is assigned to a terminal device B (110B) of a user B (115B), wherein the second set of metadata is suitable for characterizing a local position area of the terminal device B (115B);
- Forwarding the first set of metadata and the second set of metadata to a recording shared server (135), wherein a localisation algorithm is implemented on the recording shared server (135), to which the first set of metadata and the second set of metadata are transferred, wherein the localisation algorithm is configured to determine whether, based on an analysis of the metadata, the terminal device B (110B) is located in the local recording area of the recording,
**characterized in that**
the second set of metadata comprises information about which radio cells the terminal device B was connected to, at what times, wherein a mobile phone provider associated with the terminal device transfers to the recording shared server (135) the radio cells to which the terminal device B was connected, at what times.

2. Method according to Claim 1, wherein the recording is blocked and/or deleted if the terminal device B (110B) is located inside the local recording area of the recording.

3. Method according to one of the preceding claims, wherein the localisation algorithm calculates a score corresponding to a probability that the terminal device B (110B) is located in the recording area of the recording, wherein the recording is deleted and/or blocked if the score is higher than a threshold value.

4. Method according to one of Claims 2 to 3, wherein the localisation algorithm generates a control command to delete the recording, and this control command is transmitted to the terminal device A (110A), wherein the terminal device A (110A) deletes the recording locally upon receipt of the control command.

5. Method according to any one of the preceding claims, wherein the recording is shared if the terminal device A (110A) is stored in a whitelist on the recording shared server.

6. Method according to any one of the preceding claims, wherein metadata comprise:
- a timestamp of the photographs or a time span of the video recording,
- GPS positions of the terminal device A (110A) and/or terminal device B (110B),
- radio cells used by the terminal device A (110A) and/or terminal device B (110B), digital compass data of the terminal device A (110A), and/or
- gyroscope data of the terminal device A (110A).

7. Method according to any one of the preceding claims, wherein the image data of the recording is forwarded in addition to the first set of metadata.

8. Method according to Claim 7, wherein the image data of the recording is compared by the localisation algorithm with image data of the user B (115B) stored on the recording shared server (135) to determine whether the user B (115B) is on the recordings.

9. Method according to one of Claims 7 to 8, wherein the image data of the recording is sent to the user B (115B) if the localisation algorithm determines that the user B (115B) appears on the recording, wherein the user B (115B) can release the recording manually.

10. Method according to any one of the preceding claims, wherein the recording shared server (135) is connected logically upstream of a cloud environment (140) and/or is assigned to the cloud environment (140) for the purpose of storing the recordings.

11. Method according to any one of the preceding claims, wherein the recording shared server provides a secure IT environment.

12. Communication system for maintaining portrait rights related to photographs or video recordings of persons, comprising
- a terminal device A of a user A and a terminal device B of a user B;
- a recording shared server (135);
- a mobile phone provider;
- a communication network (130), wherein the terminal devices exchange at least metadata with the recording shared server;
- wherein the communication system (100) is configured to carry out the steps of the method according to any one of Claims 1 to 11.

13. Communication system according to Claim 12, comprising a cloud environment for storing recordings, wherein the cloud environment has a data connection with the recording shared server via the communication network, wherein the recording shared server is arranged logically before the cloud environment in the data direction.

## Revendications

1. Procédé pour respecter les droits de la personne lors de la prise de photos ou de vidéos de personnes comprenant les étapes suivantes :
- réalisation de prises de photos ou prises de vidéos par un utilisateur A (115A) sur son terminal A (110A), dans lequel pendant l'enregistrement un premier ensemble de métadonnées est généré qui est associé à l'enregistrement, dans lequel le premier ensemble de métadonnées est adapté pour caractériser une zone d'enregistrement locale de l'enregistrement ;
- génération d'un deuxième ensemble de métadonnées, dans lequel le deuxième ensemble de métadonnées est associé à un terminal B (110B) d'un utilisateur B (115B), dans lequel le deuxième ensemble de métadonnées est adapté pour caractériser une plage de positions locales du terminal B (115B) ;
- transfert du premier ensemble de métadonnées et du deuxième ensemble de métadonnées à un serveur de diffusion d'enregistrement (135), dans lequel un algorithme de localisation est mis en œuvre sur le serveur de diffusion d'enregistrement (135) auquel le premier ensemble de métadonnées et le deuxième ensemble de métadonnées sont transmis, dans lequel l'algorithme de localisation est configuré pour déterminer si le terminal B (110B) est localisé sur la base d'une analyse des métadonnées dans la zone d'enregistrement locale de l'enregistrement, **caractérisé en ce que** le deuxième ensemble de métadonnées comprend des informations indiquant avec quelles cellules radio le terminal B a été connecté à quelles heures, dans lequel le fournisseur de téléphonie mobile associé au terminal transmet au serveur de diffusion d'enregistrement (135) avec quelles cellules radio le terminal B a été connecté à quelles heures.

2. Procédé selon la revendication 1, dans lequel l'enregistrement est bloqué et/ou supprimé au cas où le terminal B (110B) se trouve dans la zone d'enregistrement locale de l'enregistrement.

3. Procédé selon une des revendications précédentes, dans lequel l'algorithme de localisation calcule un score, qui correspond à une probabilité que le terminal B (110B) se trouve dans la zone d'enregistrement de l'enregistrement, dans lequel l'enregistrement est supprimé et/ou bloqué au cas où le score dépasse une valeur seuil.

4. Procédé selon une des revendications 2 à 3, dans lequel l'algorithme de localisation génère une commande de contrôle pour supprimer l'enregistrement et cette commande de contrôle est transmise au terminal A (110A), dans lequel le terminal A (110A) supprime l'enregistrement localement dès la réception de la commande de contrôle.

5. Procédé selon une des revendications précédentes, dans lequel l'enregistrement est diffusé si le terminal A (110A) est stocké sur le serveur de diffusion d'enregistrement dans une liste blanche.

6. Procédé selon une des revendications précédentes, dans lequel les métadonnées comprennent :
- un horodatage des prises de photos ou une fenêtre temporelle de l'enregistrement vidéo,
- des positions GPS du terminal A (110A) et/ou du terminal B (110B),
- des cellules radio utilisées par le terminal A (110A) et/ou le terminal B (110B), données de boussole numérique du terminal A (110A), et/ou
- des données de gyroscope du terminal A (110A).

7. Procédé selon une des revendications précédentes, dans lequel, en plus du premier ensemble de métadonnées, les données d'image de l'enregistrement sont transmises.

8. Procédé selon la revendication 7, dans lequel les données d'image de l'enregistrement provenant de l'algorithme de localisation sont comparées avec les données d'image de l'utilisateur B (115B) stockées sur le serveur de diffusion d'enregistrement (135) pour déterminer si l'utilisateur B (115B) se trouve dans les enregistrements.

9. Procédé selon une des revendications 7 à 8, dans lequel l'utilisateur B (115B) se fait envoyer les données d'image de l'enregistrement au cas où l'algorithme de localisation détermine que l'utilisateur B (115B) apparaît dans l'enregistrement, dans lequel l'utilisateur B (115B) peut diffuser manuellement l'enregistrement.

10. Procédé selon une des revendications précédentes, dans lequel le serveur de diffusion d'enregistrement (135) d'un environnement cloud (140) pour le stockage des enregistrements est logiquement connecté en amont et/ou associé à l'environnement cloud (140).

11. Procédé selon une des revendications précédentes, dans lequel le serveur de partage d'enregistrement offre un environnement informatique sécurisé.

12. Système de communication pour respecter les droits de la personne lors de la prise de photos ou de vidéos de personnes comprenant :
- un terminal A d'un utilisateur A et un terminal B d'un utilisateur B ;
- un serveur de diffusion d'enregistrement (135) ;
- un fournisseur de téléphonie mobile ;
- un réseau de communication (130), dans lequel les terminaux échangent au moins indirectement via le réseau de communication au moins des métadonnées avec le serveur de diffusion d'enregistrement ;
- dans lequel le système de communication (100) est agencé pour mettre en œuvre des étapes du procédé selon une des revendications 1 à 11.

13. Système de communication selon la revendication 12 comprenant un environnement cloud pour stocker des enregistrements, dans lequel l'environnement cloud est connecté au serveur de diffusion d'enregistrement dans une connexion de données, dans lequel le serveur de diffusion d'enregistrement est agencé logiquement devant l'environnement cloud dans la direction des données.
